# EUROPEAN PATENT SPECIFICATION

(11) **EP 3 796 207 B1**
(45) Date of publication and mention of the grant of the patent: **15.07.2026**
(21) Application number: 20736194.0
(22) Date of filing: 03.01.2020
(51) Int. Cl.: G06V 20/52, G06K 7/10

(54) **CONTAINER IDENTIFICATION SYSTEM AND METHOD, SAFETY INSPECTION DEVICE, AND PORT FACILITY**
SYSTEM UND VERFAHREN ZUR IDENTIFIZIERUNG VON BEHÄLTERN, SICHERHEITSÜBERPRÜFUNGSVORRICHTUNG UND HAFENANLAGE
SYSTÈME ET PROCÉDÉ D'IDENTIFICATION DE CONTENEUR, DISPOSITIF D'INSPECTION DE SÉCURITÉ ET INSTALLATION PORTUAIRE

(30) Priority: 04.01.2019 CN 201910009508
(43) Date of publication of application: 24.03.2021
(73) Proprietor: Tsinghua University, Haidian District Beijing 100084 (CN); Nuctech Company Limited, TongFang Building Shuangqinglu Haidian District Beijing 100084 (CN); Nuctech (Beijing) Company Limited, Beijing 101500 (CN)
(72) Inventor: LI, Jianmin, Beijing 100084 (CN); ZHANG, Li, Beijing 100084 (CN); LI, Yuanjing, Beijing 100084 (CN); CHEN, Zhiqiang, Beijing 100084 (CN); WANG, Yongming, Beijing 100084 (CN); YU, Weifeng, Beijing 100084 (CN); XU, Yanwei, Beijing 100084 (CN); ZONG, Chunguang, Beijing 100084 (CN); HU, Yu, Beijing 100084 (CN); SUN, Shangmin, Beijing 100084 (CN)
(74) Representative: Meissner Bolte Partnerschaft mbB
(86) International application number: PCT/CN2020/070304
(87) International publication number: WO 2020/140978

(56) References cited:
- CN-A- 106 324 693
- CN-A- 106 709 390
- CN-A- 108 036 778
- CN-A- 109 492 449
- CN-U- 207 263 653
- CN-U- 209 248 542

## Description

### CROSS-REFERENCE TO RELATED APPLICATIONS

The present disclosure is based on and claims priority to China Patent Application No. 201910009508.0 filed on January 4, 2019.

### FIELD OF THE DISCLOSURE

The present disclosure relates to the technical field of device detection, and in particular, to a container identification system, an identification method, a safety inspection device, and a port facility.

### BACKGROUND OF THE DISCLOSURE

At present, containers are widely used in logistics transportation. In order to be able to distinguish the containers, container numbers may be provided for the containers. It is a related art known to the inventors to attach a radio frequency identification (RFID) label to the container and bind it to a container number, so that the container number is indirectly identified by identifying the RFID. At the same time, a plurality of uprights and crossbars are fixed at a measurement site to install a plurality of detection components for identifying the container number on different sides of the container (e.g. sensors such as cameras and photoelectric switches).

CN108036778A and CN106324693A represent relevant prior art.

### SUMMARY OF THE DISCLOSURE

According to a first aspect of the present disclosure, a container identification system is provided. The container identification system includes:
a door frame, having a passage for a container to be identified to pass through;
an area laser scanner, disposed on the door frame to detect a current position of the container; and
an identification obtaining apparatus, disposed on the door frame to obtain identifications on respective surfaces of the container according to the current position of the container.

The door frame includes a cross beam and two longitudinal beams which are connected on both ends of the cross beam respectively, the area laser scanner is arranged on one of the longitudinal beams, and a laser irradiation surface of the area laser scanner faces towards the passage.

In some embodiments, the area laser scanner is configured to identify a front end surface of the container along a movement direction.

In some embodiments, the identification obtaining apparatus includes a plurality of capturing cameras, which are disposed at different positions on the door frame to capture identifications on different surfaces of the container respectively.

In some embodiments, the container identification system further including a controller, wherein the area laser scanner is configured to detect a distance between the capturing camera and an end surface of the container so as to determine the current position of the container, and the controller is configured to determine a timing when the plurality of capturing cameras are enabled according to the distance between the capturing camera and the end surface of the container.

In some embodiments, the area laser scanner is configured to detect a distance between the capturing camera and a front end surface, and the controller is configured to determine a timing when the capturing cameras are enabled for capturing the front end surface, a first side, and a front area of a top surface of the container according to the distance between the capturing camera and the front end surface, wherein an identification on the first side is disposed proximate to the front end surface; and/or
the area laser scanner is configured to detect a distance between the capturing camera and a rear end surface, and the controller is configured to determine a timing when the capturing cameras are enabled for capturing the rear end surface, a second side and a rear area of a top surface of the container according to the distance between the capturing camera and the rear end surface, wherein an identification on the second side is disposed proximate to the rear end surface.

In some embodiments, only one of the capturing cameras is in an enabled state at the same moment.

In some embodiments, the door frame includes a cross beam and two longitudinal beams which are connected on both ends of the cross beam respectively, and the plurality of capturing cameras are disposed on the cross beam and the longitudinal beams.

In some embodiments, the plurality of the capturing cameras are arranged at intervals along at least one of a length direction and a width direction of the cross beam according to positions where identifications are provided on different surfaces of the container.

In some embodiments, the plurality of capturing cameras have different capturing directions, the number of the capturing cameras is the same as that of the surfaces of the container on which identifications are provided, and the plurality of capturing cameras are configured to obtain identifications on different surfaces of the container.

In some embodiments, the container identification system further including a controller configured to receive identifications obtained by the plurality of capturing cameras, and extract identification results for voting to output a final identification result.

The identification obtaining apparatus includes:
a first capturing camera, disposed on an edge position of the cross beam proximate to an entry side of the container, and biased towards a first side of a center position of the cross beam along a length direction, configured to capture an identification on a front end surface of the container along a movement direction;
a second capturing camera, disposed on a longitudinal beam on an opposite side of the area laser scanner, and configured to capture an identification on a first side of the container opposite to the second capturing camera;
a third capturing camera, disposed on an edge position of the cross beam proximate to an exit side of the container, and at a center position of the cross beam along the length direction, and configured to capture an identification on a top surface of the container;
a fourth capturing camera, disposed on a longitudinal beam on the same side as the area laser scanner, and configured to capture an identification on a second side of the container opposite to the fourth capturing camera; and
a fifth capturing camera, disposed on an edge portion of the cross beam proximate to an exit side of the container, and biased toward a second side on a center position of the cross beam along the length direction, and configured to capture an identification on a rear end surface of the container.

The second capturing camera and the fourth capturing camera irradiate toward an inside of the door frame, and the first capturing camera, the third capturing camera and the fifth capturing camera irradiate toward an outside of the door frame, and an irradiation direction of the fifth capturing camera is inclined toward a center line of the length direction of the cross beam.

In some embodiments, the door frame includes a cross beam and two longitudinal beams, and at least one of the cross beam and the longitudinal beam has an adjustable length.

In some embodiments, the container identification system further including a base through which the area laser scanner and the identification obtaining apparatus are both mounted on the door frame, wherein the base is provided with at least one of a position adjustment mechanism and an attitude adjustment mechanism, wherein:
the position adjustment mechanism is configured to change a position where the area laser scanner or the identification obtaining apparatus disposed on the door frame; and
the attitude adjustment mechanism is configured to change an installation attitude of the area laser scanner or the identification obtaining apparatus.

According to a second aspect of the present disclosure, an identification method based on the container identification system according to the above embodiments is provided. The method includes:
detecting the current position of the container by the area laser scanner; and
obtaining identifications on respective sides of the container by the identification obtaining apparatus according to the current position of the container.

In some embodiments, the identification obtaining apparatus includes a plurality of capturing cameras respectively configured to capture identifications on different surfaces of the container, and the container identification method further includes:
receiving identifications obtained by the plurality of capturing cameras;
extracting identification results from the identifications obtained by the plurality of capturing cameras; and
outputting a final identification result after voting on the identification results.

In some embodiments, the identification obtaining apparatus includes a plurality of capturing cameras respectively configured to capture identifications on different surfaces of the container, and the step of obtaining identifications on respective sides of the container by the identification obtaining apparatus according to the current position of the container includes:
detecting a distance between the capturing camera and an end surface of the container by the area laser scanner; and
determining a timing when the plurality of capturing cameras are enabled according to the distance between the capturing camera and the end surface of the container.

In some embodiments, the identification obtaining apparatus includes a plurality of capturing cameras respectively configured to capture identifications on different surfaces of the container, so that the step of obtaining identifications on respective sides of the container by the identification obtaining apparatus according to the current position of the container includes:
detecting a distance between the capturing camera and a front end surface by the area laser scanner;
determining a timing when the capturing cameras are enabled for capturing the front end surface, a first side and a front area of a top surface of the container according to the distance between the capturing camera and the front end surface; and/or
the step of obtaining identifications on respective sides of the container by the identification obtaining apparatus according to the current position of the container includes:
detecting a distance between the capturing camera and a rear end surface by the area laser scanner;
determining a timing when the capturing cameras are enabled for capturing the rear end surface, a second side and a rear area of a top surface of the container according to the distance between the capturing camera and the rear end surface, wherein an identification on the second side is disposed proximate to the rear end surface.

In some embodiments, the step of obtaining identifications on respective sides of the container by the identification obtaining apparatus according to the current position of the container includes:
enabling a first capturing camera to obtain an identification on a front end surface when the area laser scanner detects that a distance between the first capturing camera and the front end surface of the container reaches a first preset value;
enabling a second capturing camera to obtain an identification on a first side when the area laser scanner detects that the container moves to the front end surface exceeds a second preset value of the second capturing camera, wherein the identification on the first side is proximate to the front end surface;
enabling a third capturing camera to obtain an identification on a front area of a top surface when the area laser scanner detects that a distance between the third capturing camera and the front end surface reaches a third preset value;
enabling a fourth capturing camera to obtain an identification on a second side when the area laser scanner detects that the fourth capturing camera is located in front of a rear end surface, and with a distance from the rear end surface reaching a fourth preset value, wherein the identification on the second side is proximate to the rear end;
enabling a third capturing camera to obtain an identification on a rear area of the top surface when the area laser scanner detects that the container leaves the door frame and a distance between the third capturing camera and the rear end surface reaches a fifth preset value; and
enabling a fifth capturing camera to obtain an identification on the rear end surface when the area laser scanner detects that a distance between the fifth capturing camera and the rear end surface reaches a sixth preset value.

According to a third aspect of the present disclosure, a safety inspection device is provided, including the container identification system according to the above embodiments, wherein the container identification system is installed on a boom of the safety inspection device; or a boom of the safety inspection device directly serves as a door frame of the container identification system.

According to a fourth aspect of the present disclosure, a port facility is provided, including at least one of the container identification system and the safety inspection device according to the above embodiments.

### BRIEF DESCRIPTION OF THE ACCOMPANYING DRAWINGS

The drawings described herein are used to provide a further understanding of the present disclosure and constitute a part of the present application. The illustrative embodiments of the present disclosure as well as the descriptions thereof, which are used for explaining the present disclosure, do not constitute improper definitions on the present disclosure. In the accompanying drawings:
Fig. 1 is a schematic view of positions at which identifications are provided on respective sides of a container;
Fig. 2 is a schematic view of a front structure of a container identification system according to some embodiments of the present disclosure;
Fig. 3 is a schematic view of a rear structure of a container identification method according to some embodiments of the present disclosure;
Fig. 4 is a schematic view of a module makeup of a container identification system according to some embodiments of the present disclosure;
Fig. 5 is a schematic view of a state in which the container identification system according to the present disclosure captures an identification on a front end surface of the container;
Fig. 6 is a schematic view of a state in which the container identification system according to the present disclosure captures an identification on a first side of the container;
Fig. 7 is a schematic view of a state in which the container identification system according to the present disclosure captures an identification on a front area of a top surface of the container;
Fig. 8 is a schematic view of a state in which the container identification system according to the present disclosure captures an identification on a second side of the container;
Fig. 9 is a schematic view of a state in which the container identification system according to the present disclosure captures an identification on a rear area of a top surface of the container;
Fig. 10 is a schematic view of a state in which the container identification system according to the present disclosure captures an identification on a rear end surface of the container;
Fig. 11 is a schematic structural view of a safety inspection device according to some embodiments of the present disclosure;
Fig. 12 is a schematic structural view of a safety inspection device according to other embodiments of the present disclosure.

### DETAILED DESCRIPTION OF THE PREFERRED EMBODIMENTS

The present disclosure is explained in detail below. In the following paragraphs, different aspects of the embodiments are defined in more detail.

The terms "first" and "second" recited in the present disclosure are merely for ease of description, to distinguish different constituent parts having the same name, rather than indicating a sequential or primary-secondary relationship.

In the description of the present disclosure, it is necessary to understand that, the azimuth or positional relations indicated by terms "up", "down", "left", "right", "front", "rear", "inside" and "outside", which are based on the azimuth or positional relations illustrated by the drawings, are only for facilitating description of the present disclosure, rather than indicating or implying that the device referred thereto has to present a particular azimuth, and be constructed and operated in a particular azimuth, so that it cannot be understood as limiting the protection scope of the present disclosure

The container number identification device known to the inventors has at least one of the following disadvantages: (1) when the RFID label is read, there are high requirements for label position and ambient environment, and the RFID label which needs to be continuously maintained is less cost-effective, and there is no image record, which makes it inconvenient to verify the correctness of an identification result; (2) a plurality of uprights and crossbars are fixed on the measurement site, with a large occupied area, a large number of sensors, a long debugging cycle for the sensors and a complicated layout and wiring, so that the arrangement of the components cannot even be completed at some special sites, with a restricted use. Therefore, there is a need to design a new container identification system.

In view of this, the present disclosure improves the container identification system, and provides a container identification system, an identification method, a safety inspection device and a port facility, which can reduce the installation difficulty.

In the container identification system according to the embodiments of the present disclosure, a door frame is provided with an area laser scanner and an identification obtaining apparatus. The area laser scanner is configured to detect a relative movement direction and a relative position of the container with the door frame. The identification obtaining apparatus is configured to obtain the identifications on respective sides of the container according to the position detection results of the area laser scanner. Such container identification system which integrates the area laser scanner and the identification obtaining apparatus on the door frame, may perform an integrated installation in a practical application, which improves the integration of the identification system, and occupies a small area, or may also be additionally installed on other door frame devices, thereby reducing the civil engineering work and the number of the installed brackets, with flexible and convenient use, and facilitating the installation and debugging, and also enhancing integrated transfer.

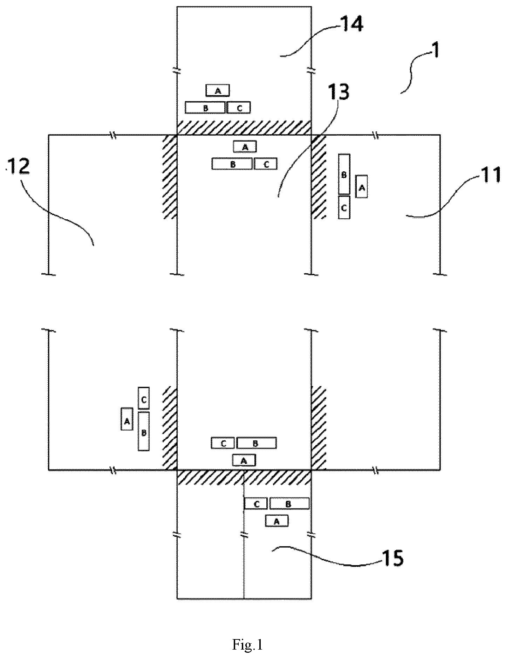

The container identification system of the present disclosure is configured to identify the identification on the container 1. As shown in Fig. 1, the container 1 may be a container. For a specific identification manner of the identification code, ISO6346:1995 Container Code, Identification and Marking standard of International Organization for Standardization stipulates the container identification system, size and container type code, as well as related identifications and identification methods. The identifications stipulated in the standard include: container owner code, device identification code, container number and check code. Specifically, as shown in Fig. 1, the identification of the container 1 includes a group of serial numbers containing four Latin letters and seven Arabic numbers which consist of a size and a container type code A, a container number and a check code B, as well as a container owner code and a device identification code C. By using identification codes with a uniform standard, it is possible to improve the universal use of the system and facilitate obtaining the identification logic, and there is no need to make individual designs so that the cost is saved. Of course, the identification code may also be a two-dimensional code commonly used at present.

As shown in Fig. 1, the respective sides of the container 1 include a first side 11, a second side 12, a top surface 13, a front end surface 14, and a rear end surface 15, the rear end surface 15 is a door end, the first side 11, the second side 12, the top surface 13, the front end surface 14 and the rear end surface 15 are all marked with a size and a container code A, a container number and check code B, as well as a container owner code and a device identification code C. On the respective sides of the container 1, the identifications are provided at different positions.

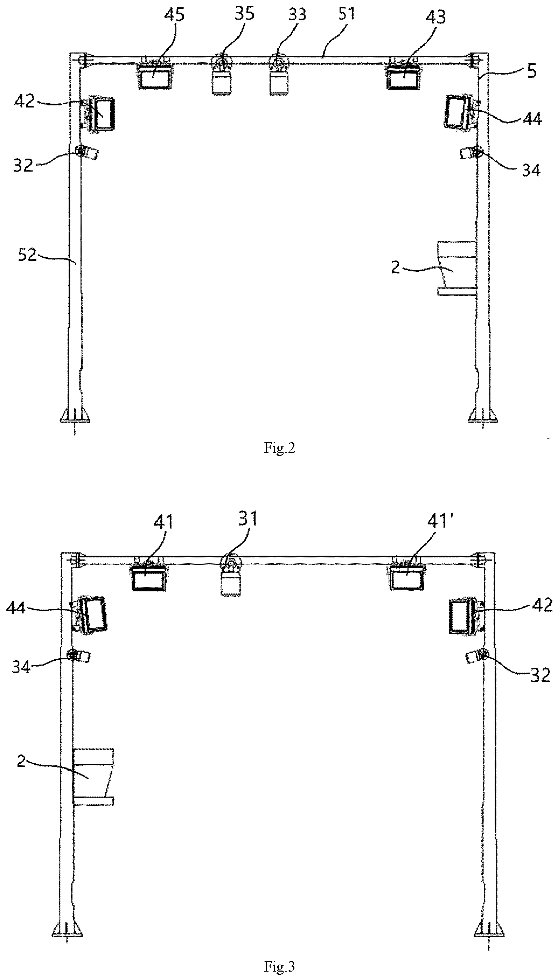

The present disclosure first provides a container identification system. In some embodiments, as shown in Fig. 2, the system includes: a door frame 5, an area laser scanner 2 and an identification obtaining apparatus, wherein the door frame 5 has a passage for the container 1 to be identified to pass through; the area laser scanner 2 is provided on the door frame 5 to detect a current position of the container 1; the identification obtaining apparatus is disposed on the door frame 5 to obtain the identifications on the respective sides of the container 1 according to the current position of the container 1 relative to the door frame 5.

During the identification process, as long as the container 1 moves relative to the door frame 5, which includes that: the door frame 5 is fixed, and the container 1 mounted on a truck or an AGV vehicle passes through the passage; the container 1 is not moved, and the door frame 5 is mounted on a mobile device so that it moves across the container 1; the door frame 5 and the container 1 are both in a movement state. Therefore, such container identification system has a favorable universal use.

Such container identification system may be fixedly provided in a site, or a roller is provided at a bottom end of the door frame 5 to move on the track, or a movable wheel is provided at a bottom end of the door frame 5, or integrated in the safety inspection device, so that there is a wide application range.

The container identification system of the embodiments of the present disclosure has at least one of the following advantages:
(1) The area laser scanner and the identification obtaining apparatus are integrated on the door frame, so that an integrated installation may be performed in a practical application, which improves the integration of the identification system, and occupies a small area, or an additional installation on other door frame devices may also be possible, thereby reducing the civil engineering work and the number of the installed brackets, with flexible and convenient use, and facilitating the installation and debugging, and also enhancing integrated transfer.
(2) By using a door frame identification system, it is possible to allow that the arrangement of components makes full use of the space in a height direction so as to reduce the space occupied within a horizontal plane, thereby improving the adaptability to different occasions. In addition, each component may be installed on the door frame in advance. During field installation, it is necessary to install the door frame, which may improve the installation efficiency.
(3) By using the area laser scanner to detect the position of the container, since the area laser scanner may emit a plurality of laser beam signals to form a laser beam scanning sector area to detect the container position, it is only necessary to provide one area laser scanner so as to be able to accurately obtain the position of the container and the positions of the identifications on respective sides, thereby lessening the number of sensors, shortening the debugging cycle, and reducing the layout and wiring difficulty.
(4) The real-time position information of the container is obtained using the area laser scanner, thereby facilitating the system to more flexibly choose a position at which the identification obtaining apparatus is arranged, and reducing the layout difficulty of the components, so that it is compatible with a plurality of applications.

In some embodiments, as shown in Fig. 2 and Fig.3, the door frame 5 includes a cross beam 51 and two longitudinal beams 52, wherein the two longitudinal beams 52 are respectively connected to both ends of the cross beam 51.

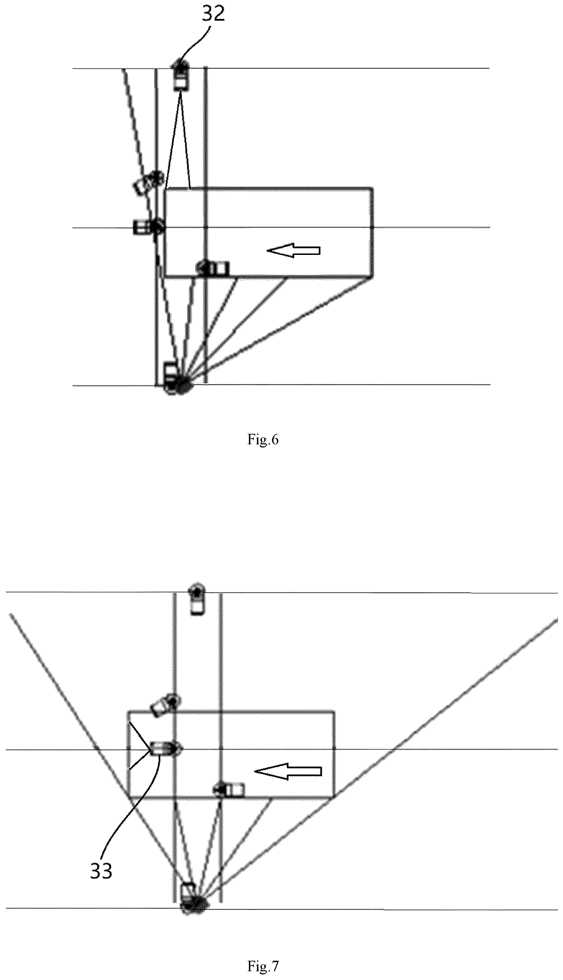

In some embodiments, as shown in Fig. 2, the area laser scanner 2 is disposed on one of the longitudinal beams 52, and the laser irradiation surface faces towards the passage. Referring to Fig. 7, the area laser scanner 2 emits a sector-shaped laser beam from the longitudinal beam 52, which may entirely cover the passage through which the container 1 passes. Alternatively, the area laser scanner 2 may be also provided on the cross beam 51.

By providing the area laser scanner 2, it is possible to automatically determine the entering direction of the vehicle on which the container 1 is mounted along the passage. Regardless of the direction in which the container 1 enters the passage, it is possible to determine the type and number of the container 1 mounted on the vehicle passing through the passage, and at the same time obtain the size code and the container type code of the container 1.

In some embodiments, the area laser scanner 2 is configured to identify the front end surface of the container 1 along a movement direction. When the vehicle on which the container 1 is mounted approaches the door frame 5, the area laser scanner 2 can distinguish the front end surface of the vehicle from the front end surface 14 of the container 1 in order to start the identification process.

In some embodiments, still referring to Fig. 1 and Fig.2, the identification obtaining apparatus includes a plurality of capturing cameras, which are disposed at different positions on the door frame 5 to capture the identifications on different surfaces of the container 1 respectively. By using a capturing camera to obtain the identification has a low requirement for the ambient environment, which may reduce the maintenance frequency, and facilitate verifying the correctness of the identification result by image recording. In some embodiments, the capturing camera is a web camera, which can directly upload the capturing result to the control system.

The container identification system also includes a controller. The area laser scanner 2 is configured to detect the distance between the camera and the end surface of the container 1 so as to determine the current position of the container 1. The controller is configured to determine the distance between the capturing camera and the end surface of the container 1 to determine the moment when the respective capturing cameras are enabled.

Since the identifications on the respective sides of the container 1 are at different positions along its movement direction, by determining the distance between each of the capturing cameras and the end surface of the container, each of the capturing cameras may capture the identification on a side to be captured when a proper distance is reached, so that it is possible to improve the accuracy of the identification result.

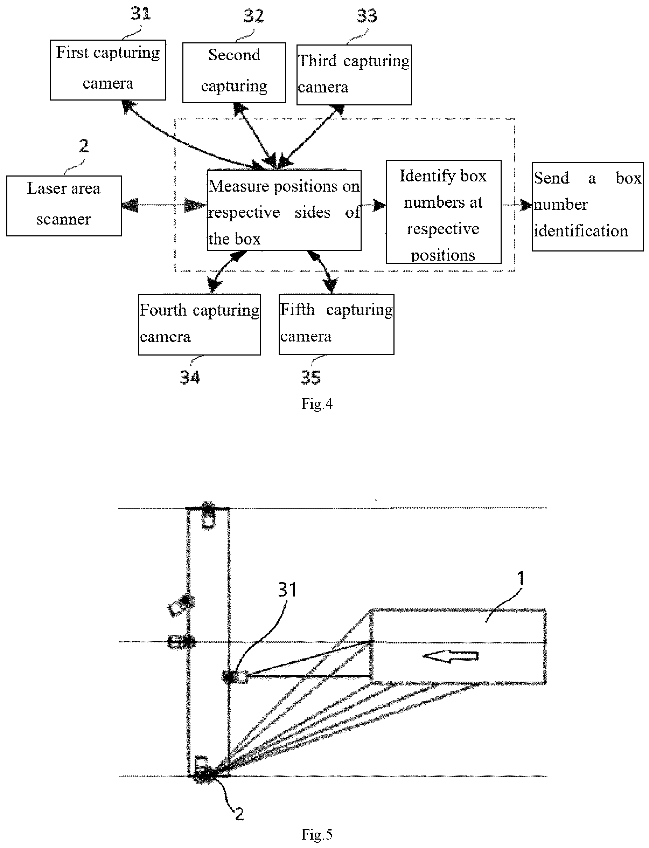

Specifically, referring to Fig. 5 to Fig. 10, the area laser scanner 2 is configured to detect a distance between the capturing camera and the front end surface 14, and the controller is configured to determine a timing when the capturing cameras are enabled for capturing the front end surface 14, the first side 11 and the front area of the top surface 13 of the container 1 according to the distance between the capturing camera and the front end surface 14. The identification on the first side 11 is disposed proximate to the front end surface 14. Since the identifications on the first side 11 and the front area of top surface 13 are closer to the front end surface 14, the timing when the cameras are enabled to identify the identifications on the front end surface 14, the first side 11, and the front area of the top surface 13 with the front end surface 14 as a reference, which facilitates improving the accuracy of the distance detection, thereby improving the accuracy of the identification result.

Alternatively, the area laser scanner 2 is configured to detect a distance between the capturing camera and the rear end surface 15, and the controller is configured to determine a timing when the capturing cameras are enabled for capturing the rear end surface 15, the second side 12, and the rear area of the top surface 13 of the container according to the distance between the capturing camera and the rear end surface 15. The identification on the second side 12 is disposed proximate to the rear end surface 15. Since the identifications on the second side 12 and the rear area of the top surface 13 are closer to the rear end surface 15, the timing when the capturing cameras are enabled to identify the rear end surface 15, the second side 12, and the rear area of the top surface 13 are determined with the rear end surface 15 as a reference, which facilitates improving the accuracy of the distance detection, thereby improving the accuracy of the identification result.

During the container number identification process, only one capturing camera is in an enabled state at the same moment. In this manner, each capturing camera can identify the identification when a proper distance is reached, thereby improving the quality of the captured image, and the plurality of capturing cameras can not be interfered during operation, thereby facilitating accurately obtaining the identifications on the container. Moreover, it is also possible to reduce the calculation processing amount performed by the controller at the same moment, which may reduce the requirements for the calculation processing capacity of the processor.

In some embodiments, as shown in Fig. 2 and Fig.3, the container identification system further includes a plurality of fill lights, which are provided on the door frame 5 for supplementing light sources for the capturing cameras at adjacent positions so as to improve the definition of the captured image or video, thereby improving the accuracy of the identification.

In some embodiments, the door frame 5 includes a cross beam 51 and two longitudinal beams 52. The two longitudinal beams 52 are respectively connected to both ends of the cross beam 51, and the respective capturing cameras are disposed on the cross beam 51 and the longitudinal beams 52. According to the needs in different sides of the capturing container 1, the capturing cameras may be provided at different positions of the door frame 5.

As shown in Fig. 5, the plurality of capturing cameras are arranged at intervals along at least one of the length direction and width direction of the cross beam 51 according to the positions where the identifications are provided on different surfaces of the container 1. By arranging the capturing cameras at intervals in the width direction of the cross beam 51 and facing the capturing surfaces towards different directions, it is possible to flexibly capture the identifications on different sides of the container 1.

In some embodiments, the capturing directions of the plurality of capturing cameras are different, the number of the capturing cameras is the same as that of the surfaces of the container 1 on which identifications are provided, and the plurality of capturing camera are configured to obtain the identifications on different surfaces of the container 1. In this embodiment, it is possible to reduce the number of the capturing cameras provided and reduce the cost whilst capturing the identifications on the respective sides of the container 1.

In some embodiments, as shown in Fig. 4, the container identification system of the present disclosure further includes a controller for receiving the identifications obtained by the plurality of capturing cameras, and extracting identification results for voting to output a final identification result. According to the positions of the respective surfaces of the container 1 obtained by the laser area scanner 2, different capturing cameras perform identification at different moments, and the identification results of the plurality of capturing cameras are sent to the controller, which determines the final identification result in a voting manner, thereby improving the accuracy of the identification.

In some embodiments, the identification obtaining apparatus includes five capturing cameras, which are as follows:

A first capturing camera 31, as shown in Fig. 3 and Fig.5, is disposed on an edge position of the cross beam 51 proximate to an entry side of the container 1, and configured to capture the identification on the front end surface 14 of the container 1 along the movement direction. Correspondingly, along a length direction of the cross beam 51, a first fill light 41 and a second fill light 41' may be provided on the cross beam 51 on both sides of the first capturing camera 31 respectively.

A second capturing camera 32, as shown in Fig. 2 and Fig.6, is disposed on a longitudinal beam 52 on an opposite side of the area laser scanner 2, and configured to capture the identification on the first side 11 of the container 1 opposite to the second capturing camera 32. Correspondingly, a third fill light 42 may be provided on the longitudinal beam 52 above or below the second capturing camera 32.

A third capturing camera 33, as shown in Fig. 2, Fig.7, and Fig.9, is disposed on an edge position of the cross beam 51 proximate to an exit side of the container 1, and located at a center position of the cross beam 51 along the length direction, for capturing the identifications on the front area and the rear area of the top surface 13 of the container 1. Correspondingly, a fourth fill light 43 may be provided on the cross beam 51 outside the third capturing camera 33.

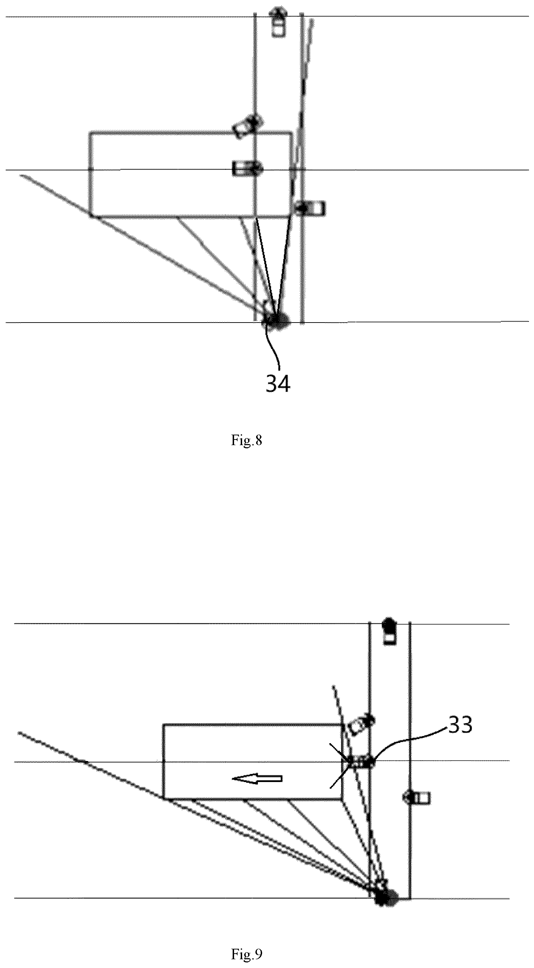

A fourth capturing camera 34, as shown in Fig. 2 and Fig.8, is disposed on the longitudinal beam 52 on the same side as the area laser scanner 2, and configured to capture the identification on the second side 12 of the container 1 opposite to the fourth capturing camera 34. Correspondingly, a fifth fill light 44 may be provided on the longitudinal beam 52 above or below the fourth capturing camera 34; and

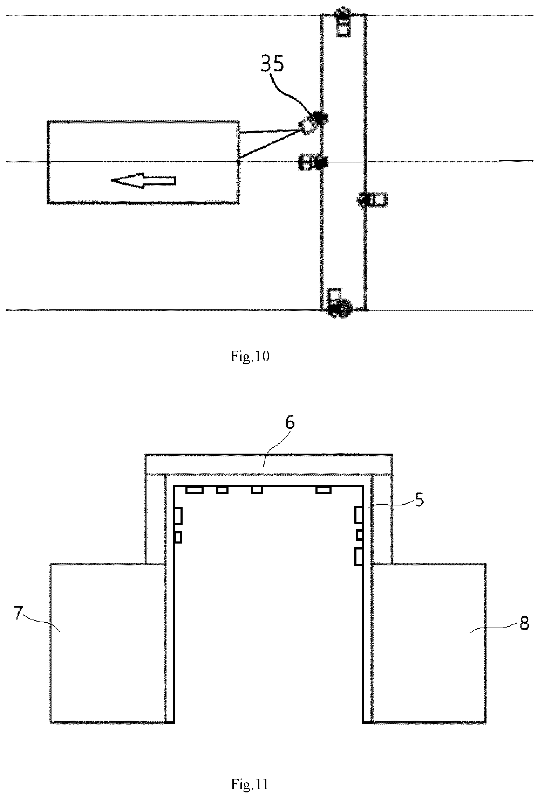

A fifth capturing camera 35, as shown in Fig. 2 and Fig. 10, is disposed on an edge position of the cross beam 51 proximate to the exit side of the container 1, and biased from the center position of the cross beam 51 along the length direction, for capturing the identification on the rear end surface 15 of the container 1 along the movement direction. Correspondingly, a sixth fill light 45 may be provided on the cross beam 51 outside the fifth capturing camera 35.

In this embodiment, by way of a reasonable layout of the respective capturing camera on the door frame 5, the respective capturing cameras may be arranged on the door frame 5 with a narrow size along the passage extending direction. Such arrangement manner may allow that the capturing of the respective capturing cameras for the respective sides of the container 1 is not affected by the size of the door frame 5 along the passage extending direction, so that it is possible to reduce the size of the door frame 5 along the passage width direction, thereby further reducing the occupied space, and realizing a lightweight design.

As shown in Fig. 5 to Fig. 10, the second capturing camera 32 and the fourth capturing camera 34 irradiate toward the inside of the door frame 5, and the first capturing camera 31, the third capturing camera 33, and the fifth capturing camera 35 irradiate toward the outside of the door frame 5. The irradiation direction of the fifth capturing camera 35 is inclined toward the center line in the length direction of the cross beam 51. The positions at which the respective capturing cameras are provided as well as the irradiation directions can align them with the identifications on the corresponding sides of the container 1.

In some embodiments, in order to improve the universal use of the container identification system, the cross beam 51 and the two longitudinal beams 52 may be designed to be structures with an adjustable length, so as to adapt to the container 1 of different widths and heights by adjusting the size of the passage size.

In such door frame 5, at least one of the width and height of the passage may be increased when the size of the container 1 is large, so that the container 1 can pass smoothly and prevent damage to the area laser scanner 2 and the identification obtaining apparatus; and at least one of the width and height of the passage may be decreased when the size of the container 1 is small, so that each component is within a proper operation distance, thereby improving the accuracy of obtaining the identification information. In addition, when the container identification system is integrated in the door frame of the safety inspection device, the adjustable door frame 5 may also adapt to the door frame size of the safety inspection device, thereby facilitating integration with the safety inspection device.

In some embodiments, since the positions where the identifications are provided on different containers 1 are also different, the area laser scanner 2 and the identification obtaining apparatus may be installed on the door frame 5 through a base on which a position adjustment mechanism and an attitude adjustment mechanism are provided. The position adjustment mechanism is configured to change a position where the area laser scanner 2 and/or the identification obtaining apparatus provided on the door frame 5, and the attitude adjustment mechanism is configured to change the installation an attitude of the area laser scanner 2 and/or the identification obtaining apparatus.

In this embodiment, it is possible to flexibly adjust at least one of the installation position and the installation attitude of the respective components according to the position where the identifications are provided on the container 1, so as to achieve a more accurate identification result and improve the universal use.

In each of the above-described embodiments, the identification includes: at least one of a container owner code, a device identification code, a container number, a check code, a size, and a container type code.

The operation principles of the container identification system of the present disclosure will be described below in conjunction with Fig. 5 to Fig. 10. The arrows indicate the movement direction of the container 1 relative to the door frame 5 within the passage. Such movement that is relative neither delimits the direction of the relative movement, nor delimits that either of the automatic identification system or the identified container is in an absolutely stationary state. At the same time, the system does not delimit the size of the gap between the containers and the number of containers continuously passing through the passage when the containers pass through the identification passage.

When the area laser scanner 2 detects that the container 1 moves to a preset position, the area laser scanner 2 identifies the front end surface 14 of the container 1 along the movement direction, and instructs the identification obtaining apparatus to carry out action processes such as capturing preparation and formal capturing. The capturing preparation actions include, but are not limited to, collection of ambient illuminance, calculation of capturing exposure parameters and gain parameters, whether to use light fill measures by lamps and the like. The formal capturing actions may be photographing or capturing video images.

When the container 1 travels to the position shown in Fig. 5, at this time, the area laser scanner 2 detects that the distance between the first capturing camera 31 and the front end surface 14 of the container 1 reaches a first preset value, and the first capturing camera 31 is enabled to obtain and store the identification size and the container type code A, the container number and the check code B, as well as the container owner code and the device identification code C on the front end surface 14 of the container 1.

When the container 1 continues to move forward to the position shown in Fig. 6, at this time, the area laser scanner 2 detects that the front end surface 14 of the container 1 exceeds the second preset value of the second capturing camera 32, and the second capturing camera 32 is enabled to obtain and store the identification on the first side 11 of the container 1.

When the container 1 continues to travel to the position shown in Fig. 7, at this time, the area laser scanner 2 detects that the front end surface 14 of the container 1 goes beyond the third camera 33, and the distance between the third camera 33 and the front end surface 14 reaches a third preset value, the third capturing camera 33 is enabled to obtain and store the identification on the front area of the top surface 13 of the container 1.

When the container 1 continues to travel to the position shown in Fig. 8, the area laser scanner 2 detects that the fourth capturing camera 34 is located in front of the rear end surface 15 and the distance reaches a fourth preset value, the fourth capturing camera 34 is enabled obtain and store the identification on the second side 12 of the container 1.

When the container 1 continues to travel to the position shown in Fig. 9, the area laser scanner 2 detects that the container 1 leaves the door frame 5 and the distance between the third capturing camera 33 and the rear end 15 reaches a fifth preset value, the third capturing camera 33 is enabled to obtain and store the identification on the rear area of the top surface 13 of the container 1.

When the container 1 continues to travel to the position shown in Fig. 10, the area laser scanner 2 detects that the distance between the fifth capturing camera 35 and the rear end surface 15 reaches a sixth preset value, and the fifth capturing camera 35 is enabled to obtain and store the identification on the rear end surface 15 of the container 1. After the container 1 leaves the container identification system, six identifications on the container 1 may be obtained by five capturing cameras.

It is assumed that the arrow direction in the drawings is a forward direction of the movement of the container 1. When the container 1 passes through the passage in a reverse direction, the capturing may be performed in a completely reverse order. Regardless of whether the container pass therethrough in a forward direction or in a reverse direction, it is not limited to an entry direction of a next vehicle on which the container 1 is mounted. Thus, such container identification system may identify at least one of the container number, the container type, and the number of containers passing through the door frame 5.

Next, the present disclosure also provides an identification method based on the container identification system of the above-described embodiments. In some embodiments, the method includes:
detecting the current position of the container 1 through the area laser scanner 2; and
obtaining the identifications on the respective sides of the container 1 according to the current position of the container 1 through the identification obtaining apparatus.

In some embodiments, the identification obtaining apparatus includes a plurality of capturing cameras, which are respectively configured to capture the identifications on different sides of the container 1. The container identification method further includes:
receiving the identifications obtained by the respective capturing cameras; and
extracting the identification results from the identifications obtained by the plurality of capturing cameras; and
outputting a final identification result after voting on the respective identification results.

The steps in this embodiment may be performed by the controller. According to the positions of the respective sides of the container 1 obtained by the laser area scanner 2, different capturing cameras perform identification at different moments, and the identification results of the respective capturing cameras are sent to the controller, which determines the final identification result in a voting manner, so as to improve the accuracy of the identification.

In some embodiments, the identification obtaining apparatus includes a plurality of capturing cameras, which are respectively configured to capture the identifications on different sides of the container 1. The step of obtaining the identifications on the respective surfaces of the container 1 by the identification obtaining apparatus according to the relative movement direction and the relative position of the container 1 and the door frame 5 includes:
detecting a distance between the capturing camera and the end surface of the container 1 by the area laser scanner 2; and
determining the timing when the plurality of capturing cameras are enabled by the controller according to the distance between the capturing camera and the end surface of the container 1.

For the container identification system of Fig. 2 and Fig.3, in one specific embodiment, the step of obtaining the identifications on the respective surfaces of the container 1 by the identification obtaining apparatus according to the current position of the container 1 specifically includes:
(1) When the area laser scanner 2 detects that the distance between the first capturing camera 31 and the front end surface 14 of the container 1 reaches the first preset value, the first capturing camera 31 is enabled to obtain the identification on the front end surface 14;
(2) When the area laser scanner 2 detects that the container 1 moves to the front end surface 14 and exceeds the second preset value of the second capturing camera 32, the second capturing camera 32 is enabled to obtain the identification on the first side 11, wherein the identification on the first side 11 is proximate to the front end surface 14;
(3) When the area laser scanner 2 detects that the distance between the third capturing camera 33 and the front end surface 14 reaches the third preset value, the third capturing camera 33 is enabled to obtain the identification on the front area of the top surface 13;
(4) When the area laser scanner 2 detects that the fourth capturing camera 34 is located in front of the rear end surface 15 and the distance reaches the fourth preset value, the fourth capturing camera 34 is enabled to obtain the identification on the second side 12, wherein the identification on the second side 12 is proximate to the rear end 15;
(5) When the area laser scanner 2 detects that the container 1 leaves the door frame 5 and the distance between the third capturing camera 33 and the rear end surface 15 reaches the fifth preset value, the third capturing camera 33 is enabled to obtain the identification on the rear area of the top surface 13.
(6) When the area laser scanner 2 detects that the distance between the fifth capturing camera 35 and the rear end surface 15 reaches the sixth preset value, the fifth capturing camera 35 is enabled to obtain the identification on the rear end surface 15.

The steps (2) and (3) are interchangeable according to the front and rear positions of the identifications on the first side 11 and the front area of the top surface 13 of the container 1; and the steps (4) and (5) are interchangeable according to the front and rear positions of the identifications on the second side 12 and the rear area of the top surface 13 of the container 1.

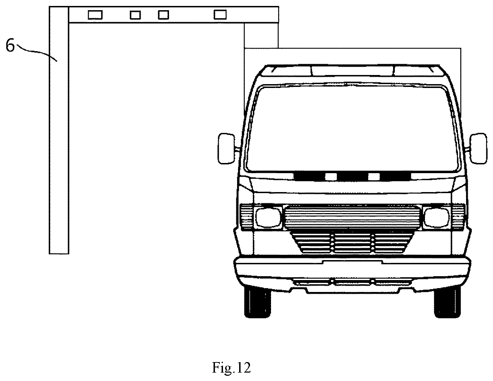

In addition, the present disclosure also provides a safety inspection device, as shown in Fig. 11 and Fig. 12, including the container identification system of the above-described embodiments. Such safety inspection device that also adds a container identification function on the basis of the inherent container interior scanning function, may enable at least one of the container identification function and the container interior scanning function as required.

If both functions are enabled at the same time, when the container 1 passes through the scanning passage of the safety inspection device, it is not only possible to inspect the conditions of goods inside the container 1 through a probe arm, but also possible to identify the identifications on the container 1 at the same time. Since the two steps are carried out simultaneously, it is possible to improve the efficiency of scanning inspections and obtaining the identifications.

In some embodiments, the container identification system is installed on the boom 6 of the safety inspection device, including a fixed installation and a detachable installation. The safety inspection device in which the container identification system is detachably installed may decide whether to add a container identification system according to user needs, or can also flexibly replace different types or specifications of container identification systems.

As shown in Fig. 11, the safety inspection device includes a boom 6, a first cabin 7 and a second cabin 8. The boom 6 is in the form of a gantry, including a transverse arm and vertical arms provided at both ends of the transverse arm. Two vertical arms are installed on the first cabin 7 and the second cabin 8 respectively. The container identification system is directly installed on the boom 6 of the safety inspection device through the door frame 5. The container identification system is installed on the safety inspection device as an independent module, which facilitates the installation. Such installation manner is suitable for the safety inspection device that uses a boom in the form of a gantry.

In other embodiments, the boom 6 of the safety inspection device directly serves as the door frame 5 of the container identification system. That is, the area laser scanner 2 and the identification obtaining apparatus are directly integrated on the boom 6 of the safety inspection device. This embodiment may simplify the structure of the boom 6 of the safety inspection device, thereby reducing the weight, and preventing deformation of the boom 6.

As shown in Fig. 12, the safety inspection device includes a boom 6 and a radiation source. The boom 6 is in the form of an L-shaped cantilever. Since the vertical arm on an installation side of the boom 6 has a short length so that it is not convenient to install the door frame 5, the boom 6 may directly serve as the door frame 5 of the container identification system so as to reduce the weight of the boom 6, and prevent deformation of the boom 6 without affecting the collapse of the boom 6. For example, the area laser scanner 2 and the identification obtaining apparatus may be installed on one side of the boom 6 along the inspection passage so as not to affect the installation of the detector. The radiation scanning system and the container identification system may share the area laser scanner 2 for detecting a movement position of the container, and the controller is configured to enable the radiation source when the container is about to reach the boom 6, and obtain the identifications on the respective sides of the container 1 according to the current position of the container 1. Such structure can reduce the use of position detecting members and simplify the structure.

The safety inspection device of the present disclosure may be a stationary, track-based mobile, or traveling safety inspection device or the like.

Finally, the present disclosure also provides a port facility including at least one of the container identification system of the above-described embodiments and the safety inspection device of the above-described embodiments. In smart ports, the container identification system may be fixed in the site, or on the track, or integrated in the safety inspection device.

In some embodiments, the port facility further includes a container 1, and the identifications provided on different sides of the container are the same. Generally, the positions where the identifications are provided on the respective sides of the general container are fixed.

In some embodiments, a plurality of identifications are arranged asymmetrically on the container, and a plurality of capturing cameras are arranged asymmetrically within the passage, so as to sequentially obtain the identification information in different orientations of the container. Compared to a simultaneously obtaining manner, by sequentially obtaining the identification information in different orientations of the container, it is possible to reduce the calculation processing amount performed by the processor at the same time, thereby reducing the requirements for the calculation processing capacity of the processor. Moreover, the sequentially obtaining manner also facilitates accurately obtaining the identifications on the container.

The container identification system, identification method, safety inspection device and port facility provided by the present disclosure have been described in detail above. Specific examples are applied herein to explain the principles and embodiments of the present disclosure. The descriptions of the above embodiments are only intended to help understand the methods and core ideas of the present disclosure.

## Claims

1. A container detection system, comprising:
a door frame (5), having a passage for a container (1) to be identified to pass through;
an area laser scanner (2), disposed on the door frame (5) to detect a current position of the container (1); and
an identification obtaining apparatus, disposed on the door frame (5) to obtain identifications on respective surfaces of the container (1) according to the current position of the container (1);
wherein the door frame (5) comprises a cross beam (51) and two longitudinal beams (52) which are connected on both ends of the cross beam (51) respectively, the area laser scanner (2) is arranged on one of the longitudinal beams (52), and a laser irradiation surface of the area laser scanner (2) faces towards the passage;
wherein the identification obtaining apparatus comprises:
a first capturing camera (31), disposed on an edge position of the cross beam (51) proximate to an entry side of the container (1), and biased towards a first side of a center position of the cross beam (51) along a length direction, configured to capture an identification on a front end surface (14) of the container (1) along a movement direction;
a second capturing camera (32), disposed on a longitudinal beam (52) on an opposite side of the area laser scanner (2), and configured to capture an identification on a first side (11) of the container (1) opposite to the second capturing camera (32);
a third capturing camera (33), disposed on an edge position of the cross beam (51) proximate to an exit side of the container (1), and at a center position of the cross beam (51) along the length direction, and configured to capture an identification on a top surface (13) of the container (1);
a fourth capturing camera (34), disposed on a longitudinal beam (52) on the same side as the area laser scanner (2), and configured to capture an identification on a second side (12) of the container (1) opposite to the fourth capturing camera (34); and
a fifth capturing camera (35), disposed on an edge portion of the cross beam (51) proximate to an exit side of the container (1), and biased toward a second side on a center position of the cross beam (51) along the length direction, and configured to capture an identification on a rear end surface (15) of the container (1);
wherein the second capturing camera (31) and the fourth capturing camera (34) irradiate toward an inside of the door frame (5), and the first capturing camera (31), the third capturing camera (33) and the fifth capturing camera (35) irradiate toward an outside of the door frame (5), and an irradiation direction of the fifth capturing camera (35) is inclined toward a center line of the length direction of the cross beam (51).

2. The container detection system according to claim 1, wherein the area laser scanner (2) is configured to identify a front end surface of the container (1) along a movement direction.

3. The container detection system according to claim 1, wherein the identification obtaining apparatus comprises a plurality of capturing cameras, which are disposed at different positions on the door frame (5) to capture identifications on different surfaces of the container (1) respectively;
optionally, only one of the capturing cameras is in an enabled state at the same moment;
optionally, the plurality of capturing cameras have different capturing directions, the number of the capturing cameras is the same as that of the surfaces of the container (1) on which identifications are provided, and the plurality of capturing cameras are configured to obtain identifications on different surfaces of the container (1);
optionally, the container identification system further comprising a controller configured to receive identifications obtained by the plurality of capturing cameras, and extract identification results for voting to output a final identification result.

4. The container detection system according to claim 3, further comprising a controller, wherein the area laser scanner (2) is configured to detect a distance between the capturing camera and an end surface of the container (1) so as to determine the current position of the container (1), and the controller is configured to determine a timing when the plurality of capturing cameras are enabled according to the distance between the capturing camera and the end surface of the container (1);
optionally, the area laser scanner (2) is configured to detect a distance between the capturing camera and a front end surface (14), and the controller is configured to determine a timing when the capturing cameras are enabled for capturing the front end surface (14), a first side (11), and a front area of a top surface (13) of the container (1) according to the distance between the capturing camera and the front end surface (14), wherein an identification on the first side (11) is disposed proximate to the front end surface (14); and/or
the area laser scanner (2) is configured to detect a distance between the capturing camera and a rear end surface (15), and the controller is configured to determine a timing when the capturing cameras are enabled for capturing the rear end surface (15), a second side (12) and a rear area of a top surface (13) of the container (1) according to the distance between the capturing camera and the rear end surface (15), wherein an identification on the second side (12) is disposed proximate to the rear end surface (15).

5. The container detection system according to claim 3, wherein the door frame (5) comprises a cross beam (51) and two longitudinal beams (52) which are connected on both ends of the cross beam (51) respectively, and the plurality of capturing cameras are disposed on the cross beam (51) and the longitudinal beams (52);
optionally, the plurality of the capturing cameras are arranged at intervals along at least one of a length direction and a width direction of the cross beam (51) according to positions where identifications are provided on different surfaces of the container (1).

6. The container detection system according to claim 1, wherein the door frame (5) comprises a cross beam (51) and two longitudinal beams (52), and at least one of the cross beam (51) and the longitudinal beam (52) has an adjustable length.

7. The container detection system according to claim 1, further comprising a base through which the area laser scanner (2) and the identification obtaining apparatus are both mounted on the door frame (5), wherein the base is provided with at least one of a position adjustment mechanism and an attitude adjustment mechanism, wherein:
the position adjustment mechanism is configured to change a position where the area laser scanner (2) or the identification obtaining apparatus disposed on the door frame (5); and
the attitude adjustment mechanism is configured to change an installation attitude of the area laser scanner (2) or the identification obtaining apparatus.

8. A detection method based on the container detection system according to any one of claims 1 to 7, comprising:
detecting the current position of the container (1) by the area laser scanner (2); and
obtaining identifications on respective surfaces of the container (1) by the identification obtaining apparatus according to the current position of the container (1).

9. The container detection method according to claim 8, wherein the identification obtaining apparatus comprises a plurality of capturing cameras respectively configured to capture identifications on different surfaces of the container (1), and the container detection method further comprises:
receiving identifications obtained by the plurality of capturing cameras;
extracting identification results from the identifications obtained by the plurality of capturing cameras; and
outputting a final identification result after voting on the identification results.

10. The container detection method according to claim 8, wherein the identification obtaining apparatus comprises a plurality of capturing cameras respectively configured to capture identifications on different surfaces of the container (1), and the step of obtaining identifications on respective surfaces of the container (1) by the identification obtaining apparatus according to the current position of the container (1) comprises:
detecting a distance between the capturing camera and an end surface of the container (1) by the area laser scanner (2); and
determining a timing when the plurality of capturing cameras are enabled according to the distance between the capturing camera and the end surface of the container (1);
optionally, the identification obtaining apparatus comprises a plurality of capturing cameras respectively configured to capture identifications on different surfaces of the container (1), so that the step of obtaining identifications on respective sides of the container (1) by the identification obtaining apparatus according to the current position of the container (1) comprises:
detecting a distance between the capturing camera and a front end surface (14) by the area laser scanner (2);
determining a timing when the capturing cameras are enabled for capturing the front end surface (14), a first side (11) and a front area of a top surface (13) of the container (1) according to the distance between the capturing camera and the front end surface (14); and/or
the step of obtaining identifications on respective sides of the container (1) by the identification obtaining apparatus according to the current position of the container (1) comprises:
detecting a distance between the capturing camera and a rear end surface (15) by the area laser scanner (2);
determining a timing when the capturing cameras are enabled for capturing the rear end surface (15), a second side (12) and a rear area of a top surface (13) of the container according to the distance between the capturing camera and the rear end surface (15), wherein an identification on the second side (12) is disposed proximate to the rear end surface (15).

11. The container detection method according to claim 8, wherein the step of obtaining identifications on respective sides of the container (1) by the identification obtaining apparatus according to the current position of the container (1) comprises:
enabling a first capturing camera (31) to obtain an identification on a front end surface (14) when the area laser scanner (2) detects that a distance between the first capturing camera (31) and the front end surface (14) of the container (1) reaches a first preset value;
enabling a second capturing camera (32) to obtain an identification on a first side (11) when the area laser scanner (2) detects that the container (1) moves to the front end surface (14) exceeds a second preset value of the second capturing camera (32), wherein the identification on the first side (11) is proximate to the front end surface (14);
enabling a third capturing camera (33) to obtain an identification on a front area of a top surface (13) when the area laser scanner (2) detects that a distance between the third capturing camera (33) and the front end surface (14) reaches a third preset value;
enabling a fourth capturing camera (34) to obtain an identification on a second side (12) when the area laser scanner (2) detects that the fourth capturing camera (34) is located in front of a rear end surface (15), and with a distance from the rear end surface (15) reaching a fourth preset value, wherein the identification on the second side (12) is proximate to the rear end (15);
enabling a third capturing camera (33) to obtain an identification on a rear area of the top surface (13) when the area laser scanner (2) detects that the container (1) leaves the door frame (5) and a distance between the third capturing camera (33) and the rear end surface (15) reaches a fifth preset value; and
enabling a fifth capturing camera (35) to obtain an identification on the rear end surface (15) when the area laser scanner (2) detects that a distance between the fifth capturing camera (35) and the rear end surface (15) reaches a sixth preset value.

12. A safety inspection device, comprising the container detection system according to any one of claims 1 to 7, wherein the container identification system is installed on a boom (6) of the safety inspection device; or a boom (6) of the safety inspection device directly serves as a door frame (5) of the container identification system.

13. A port facility, comprising at least one of the container detection system according to any one of claims 1 to 7 and the safety inspection device according to claim 12.

## Patentansprüche

1. Behältererkennungssystem, umfassend:
einen Türrahmen (5) mit einem Durchgang für einen zu identifizierenden Behälter (1) zum Durchgehen;
einen Flächenlaserscanner (2), angeordnet am Türrahmen (5), um eine aktuelle Position des Behälters (1) zu erkennen; und
eine Einrichtung zum Erhalten einer Identifizierung, angeordnet an dem Türrahmen (5), um Identifizierungen auf jeweiligen Oberflächen des Behälters (1) entsprechend der aktuellen Position des Behälters (1) zu erhalten;
wobei der Türrahmen (5) einen Querträger (51) und zwei Längsträger (52) umfasst, die jeweils an beiden Enden des Querträgers (51) verbunden sind, wobei der Flächenlaserscanner (2) an einem der Längsträger (52) angeordnet ist und eine Laserbestrahlungsfläche des Flächenlaserscanners (2) in Richtung des Durchgangs weist;
wobei die Einrichtung zum Erhalten einer Identifizierung Folgendes umfasst:
eine erste Erfassungskamera (31), die an einer Kantenposition des Querträgers (51) in der Nähe einer Eintrittsseite des Behälters (1) angeordnet ist und in Richtung einer ersten Seite einer Mittelposition des Querträgers (51) entlang einer Längsrichtung vorgespannt und ausgelegt ist, eine Identifizierung einer vorderen Endoberfläche (14) des Behälters (1) entlang einer Bewegungsrichtung zu erfassen;
eine zweite Erfassungskamera (32), die an einem Längsträger (52) auf einer dem Flächenlaserscanner (2) gegenüberliegenden Seite angeordnet und dazu ausgelegt ist, eine Identifizierung einer ersten Seite (11) des Behälters (1) gegenüber der zweiten Erfassungskamera (32) zu erfassen;
eine dritte Erfassungskamera (33), die an einer Kantenposition des Querträgers (51) in der Nähe einer Ausgangsseite des Behälters (1) und an einer Mittelposition des Querträgers (51) entlang der Längsrichtung angeordnet und dazu ausgelegt ist, eine Identifizierung auf einer oberen Oberfläche (13) des Behälters (1) zu erfassen;
eine vierte Erfassungskamera (34), die auf einem Längsträger (52) auf der gleichen Seite wie der Flächenlaserscanner (2) angeordnet und dazu ausgelegt ist, eine Identifizierung auf einer zweiten Seite (12) des Behälters (1) gegenüber der vierten Erfassungskamera (34) zu erfassen; und
eine fünfte Erfassungskamera (35), die an einem Kantenabschnitt des Querträgers (51) in der Nähe einer Ausgangsseite des Behälters (1) angeordnet ist und in Richtung einer zweiten Seite einer Mittelposition des Querträgers (51) entlang der Längsrichtung vorgespannt und dazu ausgelegt ist, eine Identifizierung einer hinteren Endoberfläche (15) des Behälters (1) zu erfassen;
wobei die zweite Erfassungskamera (31) und die vierte Erfassungskamera (34) in Richtung einer Innenseite des Türrahmens (5) strahlen und die erste Erfassungskamera (31), die dritte Erfassungskamera (33) und die fünfte Erfassungskamera (35) in Richtung einer Außenseite des Türrahmens (5) strahlen und eine Strahlungsrichtung der fünften Erfassungskamera (35) zu einer Mittellinie der Längsrichtung des Querträgers (51) geneigt ist.

2. Behältererkennungssystem nach Anspruch 1, wobei der Flächenlaserscanner (2) dazu ausgelegt ist, eine vordere Endoberfläche des Behälters (1) entlang einer Bewegungsrichtung zu erkennen.

3. Behältererkennungssystem nach Anspruch 1, wobei die Einrichtung zum Erhalten einer Identifizierung eine Vielzahl von Erfassungskameras umfasst, die an verschiedenen Positionen auf dem Türrahmen (5) angeordnet sind, um Identifizierungen jeweils auf verschiedenen Oberflächen des Behälters (1) zu erfassen;
gegebenenfalls wobei nur eine der Erfassungskamera sich zum selben Zeitpunkt in einem aktivierten Zustand befindet;
gegebenenfalls wobei die Vielzahl von Erfassungskameras verschiedene Erfassungsrichtungen aufweisen, wobei die Anzahl der Erfassungskameras die gleiche ist, wie die der Oberflächen des Behälters (1), auf dem Identifizierungen bereitgestellt sind, und die Vielzahl von Erfassungskamera dazu ausgelegt ist, Identifizierungen an verschiedenen Oberflächen des Behälters (1) zu erhalten;
gegebenenfalls wobei das Behälteridentifizierungssystem ferner eine Steuerung umfasst, die dazu ausgelegt ist, durch die Vielzahl von Erfassungskameras erhaltene Identifizierungen zu empfangen und Identifizierungsergebnisse zur Abstimmung zu extrahieren, um ein endgültiges Identifizierungsergebnis auszugeben.

4. Behältererkennungssystem nach Anspruch 3, ferner umfassend eine Steuerung, wobei der Flächenlaserscanner (2) dazu ausgelegt ist, einen Abstand zwischen der Erfassungskamera und einer Endoberfläche des Behälters (1) zu erkennen, um so die aktuelle Position des Behälters (1) zu erkennen, und die Steuerung dazu ausgelegt ist, einen Zeitpunkt, an dem die Vielzahl von Erfassungskameras aktiviert wird, gemäß dem Abstand zwischen der Erfassungskamera und der Endoberfläche des Behälters (1) zu bestimmen;
gegebenenfalls wobei der Flächenlaserscanner (2) dazu ausgelegt ist, einen Abstand zwischen der Erfassungskamera und einer vorderen Endoberfläche (14) zu erkennen, und die Steuerung dazu ausgelegt ist, einen Zeitpunkt, an dem die Erfassungskameras zum Erfassen der vorderen Endoberfläche (14), einer ersten Seite (11) und einem vorderen Bereich einer oberen Oberfläche (13) des Behälters (1) aktiviert werden, gemäß dem Abstand zwischen der Erfassungskamera und der vorderen Endoberfläche (14) zu bestimmen, wobei eine Identifizierung auf der ersten Seite (11) in der Nähe der vorderen Endoberfläche (14) angeordnet ist; und/oder
der Flächenlaserscanner (2) dazu ausgelegt ist, einen Abstand zwischen der Erfassungskamera und einer hinteren Endoberfläche (15) zu erkennen, und die Steuerung dazu ausgelegt ist, einen Zeitpunkt, an dem die Erfassungskameras für ein Erfassen der hinteren Endoberfläche (15), einer zweiten Seite (12) und einem hinteren Bereich der oberen Oberfläche (13) des Behälters (1) aktiviert werden, gemäß dem Abstand zwischen der Erfassungskamera und der hinteren Endoberfläche (15) zu bestimmen, wenn eine Identifizierung auf der zweiten Seite (12) in der Nähe der hinteren Endoberfläche (15) angeordnet ist.

5. Behältererkennungssystem nach Anspruch 3, wobei der Türrahmen (5) einen Querträger (51) und zwei Längsträger (52) umfasst, die jeweils an beiden Enden des Querträgers (51) verbunden sind, und die Vielzahl von Erfassungskameras auf dem Querträger (51) und den Längsträgern (52) angeordnet sind;
gegebenenfalls wobei die Vielzahl der Erfassungskameras in Abständen entlang wenigstens einem einer Längsrichtung und einer Breitenrichtung des Querträgers (51) angeordnet sind, gemäß Positionen, an denen Identifizierungen auf verschiedenen Oberflächen des Behälters (1) bereitgestellt sind.

6. Behältererkennungssystem nach Anspruch 1, wobei der Türrahmen (5) einen Querträger (51) und zwei Längsträger (52) umfasst und wenigstens einer des Querträgers (51) und des Längsträgers (52) eine einstellbare Länge aufweist.

7. Behältererkennungssystem nach Anspruch 1, ferner umfassend einen Sockel, über den der Flächenlaserscanner (2) und die Einrichtung zum Erhalten der Identifizierung beide an dem Türrahmen (5) angebracht sind, wobei der Sockel mit wenigstens einem Positionseinstellmechanismus und einem Lageeinstellmechanismus versehen ist, wobei
der Positionseinstellmechanismus dazu ausgelegt ist, eine Position zu verändern, an der der Flächenlaserscanner (2) oder die Einrichtung zum Erhalten einer Identifizierung an dem Türrahmen (5) angeordnet ist; und
der Lageeinstellmechanismus dazu ausgelegt ist, eine Installationslage des Flächenlaserscanners (2) oder der Einrichtung zum Erhalten einer Identifizierung zu verändern.

8. Erkennungsverfahren, basierend auf dem Behältererkennungssystem nach einem der Ansprüche 1 bis 7, umfassend:
Erkennen der aktuellen Position des Behälters (1) durch den Flächenlaserscanner (2); und
Erhalten von Identifizierungen auf jeweiligen Oberflächen des Behälters (1) durch die Einrichtung zum Erhalten einer Identifizierung gemäß der aktuellen Position des Behälters (1).

9. Behältererkennungsverfahren nach Anspruch 8, wobei die Einrichtung zum Erhalten einer Identifizierung eine Vielzahl von Erfassungskameras umfasst, die jeweils dazu ausgelegt sind, Identifizierung auf verschiedenen Oberflächen des Behälters (1) zu erfassen, und wobei das Behältererkennungsverfahren ferner umfasst:
Empfangen von durch die Vielzahl von Erfassungskameras erhaltenen Identifizierungen;
Extrahieren der Identifizierungsergebnisse aus den durch die Vielzahl von Erfassungskameras erhaltenen Identifizierungen; und
Ausgeben eines endgültigen Identifizierungsergebnisses nach Abstimmung über die Identifizierungsergebnisse.

10. Behältererkennungsverfahren nach Anspruch 8, wobei die Einrichtung zum Erhalten einer Identifizierung eine Vielzahl von Erfassungskameras umfasst, die jeweils dazu ausgelegt sind, Identifizierungen auf verschiedenen Oberflächen des Behälters (1) zu erfassen, und wobei der Schritt des Erhaltens von Identifizierungen auf jeweiligen Oberflächen des Behälters (1) durch die Einrichtung zum Erhalten einer Identifizierung gemäß der aktuellen Position des Behälters (1) umfasst:
Erkennen eines Abstands zwischen der Erfassungskamera und einer Endoberfläche des Behälters (1) durch den Flächenlaserscanner (2); und
Bestimmen eines Zeitpunkts, an dem die Vielzahl von Erfassungskameras aktiviert wird, gemäß dem Abstand zwischen der Erfassungskamera und der Endoberfläche des Behälters (1);
gegebenenfalls wobei die Einrichtung zum Erhalten einer Identifizierung eine Vielzahl von Erfassungskameras umfasst, die jeweils dazu ausgelegt sind, Identifizierungen auf verschiedenen Oberflächen des Behälters (1) zu erfassen, sodass der Schritt des Erhaltens von Identifizierungen auf jeweiligen Seiten des Behälters (1) durch die Einrichtung zum Erhalten einer Identifizierung gemäß der aktuellen Position des Behälters (1) umfasst:
Erkennen eines Abstands zwischen der Erfassungskamera und einer vorderen Endoberfläche des Behälters (14) durch den Flächenlaserscanner (2);
Bestimmen eines Zeitpunkts, an dem die Vielzahl von Erfassungskameras zum Erfassen der vorderen Endoberfläche (14), einer ersten Seite (11) und eines vorderen Bereichs der oberen Oberfläche (13) des Behälters (1) aktiviert werden, gemäß dem Abstand zwischen der Erfassungskamera und der vorderen Endoberfläche (14); und/oder
der Schritt des Erhaltens von Identifizierungen auf jeweiligen Oberflächen des Behälters (1) durch die Einrichtung zum Erhalten einer Identifizierung gemäß der aktuellen Position des Behälters (1) umfasst:
Erkennen eines Abstands zwischen der Erfassungskamera und einer hinteren Endoberfläche des Behälters (15) durch den Flächenlaserscanner (2);
Bestimmen eines Zeitpunkts, an dem die Erfassungskameras für ein Erfassen der hinteren Endoberfläche (15), einer zweiten Seite (12) und eines hinteren Bereichs der oberen Oberfläche (13) des Behälters aktiviert werden, gemäß dem Abstand zwischen der Erfassungskamera und der hinteren Endoberfläche (15), wenn eine Identifizierung auf der zweiten Seite (12) in der Nähe der hinteren Endoberfläche (15) angeordnet ist.

11. Behältererkennungsverfahren nach Anspruch 8, wobei der Schritt des Erhaltens von Identifizierungen auf jeweiligen Oberflächen des Behälters (1) durch die Einrichtung zum Erhalten einer Identifizierung gemäß der aktuellen Position des Behälters (1) umfasst:
Aktivieren einer ersten Erfassungskamera (31), um eine Identifizierung auf einer vorderen Endoberfläche (14) zu erhalten, wenn der Flächenlaserscanner (2) erkennt, dass ein Abstand zwischen der ersten Erfassungskamera (31) und der vorderen Endoberfläche (14) des Behälters (1) einen ersten voreingestellten Wert erreicht;
Aktivieren einer zweiten Erfassungskamera (32), um eine Identifizierung auf einer ersten Seite (11) zu erhalten, wenn der Flächenlaserscanner (2) erkennt, dass der Behälter (1) sich zu der vorderen Endoberfläche (14) bewegt überschreitet einen zweiten voreingestellten Wert der zweiten Erfassungskamera (32), wobei die Identifizierung auf der ersten Seite (11) sich in der Nähe der vorderen Endoberfläche (14) befindet;
Aktivieren einer dritten Erfassungskamera (33), um eine Identifizierung auf einem vorderen Bereich einer oberen Oberfläche (13) zu erhalten, wenn der Flächenlaserscanner (2) erkennt, dass ein Abstand zwischen der dritten Erfassungskamera (33) und der vorderen Endoberfläche (14) einen dritten voreingestellten Wert erreicht;
Aktivieren einer vierten Erfassungskamera (34), um eine Identifizierung auf einer zweiten Seite (12) zu erhalten, wenn der Flächenlaserscanner (2) erkennt, dass die vierte Erfassungskamera (34) sich vor einer hinteren Endoberfläche (15) befindet, und wenn ein Abstand von der hinteren Endoberfläche (15) einen vierten voreingestellten Wert erreicht, wobei sich die Identifizierung auf der zweiten Seite (12) in der Nähe des hinteren Endes (15) befindet;
Aktivieren einer dritten Erfassungskamera (33), um eine Identifizierung auf einem hinteren Bereich einer oberen Oberfläche (13) zu erhalten, wenn der Flächenlaserscanner (2) erkennt, dass der Behälter (1) den Türrahmen (5) verlässt und ein Abstand zwischen der dritten Erfassungskamera (33) und der hinteren Endoberfläche (15) einen fünften voreingestellten Wert erreicht; und
Aktivieren einer fünften Erfassungskamera (35), um eine Identifizierung auf einer hinteren Endoberfläche (15) zu erhalten, wenn der Flächenlaserscanner (2) erkennt, dass ein Abstand zwischen der fünften Erfassungskamera (35) und der hinteren Endoberfläche (15) einen sechsten voreingestellten Wert erreicht.

12. Sicherheitsuntersuchungsvorrichtung, umfassend das Behältererkennungssystem nach einem der Ansprüche 1 bis 7, wobei das Behälteridentifizierungssystem an einem Ausleger (6) der Sicherheitsuntersuchungsvorrichtung montiert ist; oder ein Ausleger (6) der Sicherheitsuntersuchungsvorrichtung direkt als ein Türrahmen (5) des Behältererkennungssystems dient.

13. Hafenanlage, umfassend wenigstens eines des Behältererkennungssystems nach einem der Ansprüche 1 bis 7 und der Sicherheitsuntersuchungsvorrichtung nach Anspruch 12.

## Revendications

1. Système de détection de conteneur, comprenant :
un cadre de porte (5), présentant un passage pour qu'un conteneur (1) soit identifié pour passer ;
un scanner laser de zone (2), disposé sur le cadre de porte (5) pour détecter une position actuelle du conteneur (1) ; et
un appareil d'obtention d'identification, disposé sur le cadre de porte (5) pour obtenir des identifications sur des surfaces respectives du conteneur (1) en fonction de la position actuelle du conteneur (1) ;
dans lequel le cadre de porte (5) comprend une poutre transversale (51) et deux poutres longitudinales (52) qui sont respectivement reliées aux deux extrémités de la poutre transversale (51), le scanner laser de zone (2) est agencé sur l'une des poutres longitudinales (52), et une surface d'irradiation laser du scanner laser de zone (2) est orientée vers le passage ;
dans lequel l'appareil d'obtention d'identification comprend :
une première caméra de capture (31), disposée sur une position de bord de la poutre transversale (51) proche d'un côté d'entrée du conteneur (1), et sollicitée vers un premier côté d'une position centrale de la poutre transversale (51) le long d'une direction de longueur, configurée pour capturer une identification sur une surface d'extrémité avant (14) du conteneur (1) le long d'une direction de déplacement ;
une deuxième caméra de capture (32), disposée sur une poutre longitudinale (52) sur un côté opposé du scanner laser de zone (2), et configurée pour capturer une identification sur un premier côté (11) du conteneur (1) opposé à la deuxième caméra de capture (32) ;
une troisième caméra de capture (33), disposée sur une position de bord de la poutre transversale (51) proche d'un côté de sortie du conteneur (1), et à une position centrale de la poutre transversale (51) le long de la direction de longueur, et configurée pour capturer une identification sur une surface supérieure (13) du conteneur (1) ;
une quatrième caméra de capture (34), disposée sur une poutre longitudinale (52) du même côté que le scanner laser de zone (2), et configurée pour capturer une identification sur un deuxième côté (12) du conteneur (1) opposé à la quatrième caméra de capture (34) ; et
une cinquième caméra de capture (35), disposée sur une partie de bord de la poutre transversale (51) proche d'un côté de sortie du conteneur (1), et sollicitée vers un deuxième côté sur une position centrale de la poutre transversale (51) le long de la direction de longueur, et configurée pour capturer une identification sur une surface d'extrémité arrière (15) du conteneur (1) ;
dans lequel la deuxième caméra de capture (31) et la quatrième caméra de capture (34) irradient vers un intérieur du cadre de porte (5), et la première caméra de capture (31), la troisième caméra de capture (33) et la cinquième caméra de capture (35) irradient vers un extérieur du cadre de porte (5), et une direction d'irradiation de la cinquième caméra de capture (35) est inclinée vers une ligne centrale de la direction de longueur de la poutre transversale (51).

2. Système de détection de conteneur selon la revendication 1, dans lequel le scanner laser de zone (2) est configuré pour identifier une surface d'extrémité avant du conteneur (1) le long d'une direction de mouvement.

3. Système de détection de conteneur selon la revendication 1, dans lequel l'appareil d'obtention d'identification comprend une pluralité de caméras de capture, qui sont disposées à différentes positions sur le cadre de porte (5) pour capturer des identifications sur différentes surfaces du conteneur (1) respectivement ; facultativement, une seule des caméras de capture est dans un état activé à la fois ;
facultativement, la pluralité de caméras de capture présentent des directions de capture différentes, le nombre de caméras de capture est le même que celui des surfaces du conteneur (1) sur lesquelles des identifications sont fournies, et la pluralité de caméras de capture sont configurées pour obtenir des identifications sur différentes surfaces du conteneur (1) ; facultativement, le système d'identification de conteneur comprenant en outre un dispositif de commande configuré pour recevoir des identifications obtenues par la pluralité de caméras de capture, et extraire des résultats d'identification pour voter pour délivrer un résultat d'identification final.

4. Système de détection de conteneur selon la revendication 3, comprenant en outre un dispositif de commande, dans lequel le scanner laser de zone (2) est configuré pour détecter une distance entre la caméra de capture et une surface d'extrémité du conteneur (1) de manière à déterminer la position actuelle du conteneur (1), et le dispositif de commande est configuré pour déterminer un moment auquel la pluralité de caméras de capture sont activées en fonction de la distance entre la caméra de capture et la surface d'extrémité du conteneur (1) ; facultativement, le scanner laser de zone (2) est configuré pour détecter une distance entre la caméra de capture et une surface d'extrémité avant (14), et le dispositif de commande est configuré pour déterminer un moment auquel les caméras de capture sont activées pour capturer la surface d'extrémité avant (14), un premier côté (11), et une zone avant d'une surface supérieure (13) du conteneur (1) en fonction de la distance entre la caméra de capture et la surface d'extrémité avant (14), dans lequel une identification sur le premier côté (11) est disposée à proximité de la surface d'extrémité avant (14) ; et/ou le scanner laser de zone (2) est configuré pour détecter une distance entre la caméra de capture et une surface d'extrémité arrière (15), et le dispositif de commande est configuré pour déterminer un moment auquel les caméras de capture sont activées pour capturer la surface d'extrémité arrière (15), un deuxième côté (12) et une zone arrière d'une surface supérieure (13) du conteneur (1) en fonction de la distance entre la caméra de capture et la surface d'extrémité arrière (15), dans lequel une identification sur le deuxième côté (12) est disposée à proximité de la surface d'extrémité arrière (15).

5. Système de détection de conteneur selon la revendication 3, dans lequel le cadre de porte (5) comprend une poutre transversale (51) et deux poutres longitudinales (52) qui sont respectivement reliées aux deux extrémités de la poutre transversale (51), et la pluralité de caméras de capture sont disposées sur la poutre transversale (51) et les poutres longitudinales (52) ;
facultativement, la pluralité de caméras de capture sont agencées à intervalles le long d'au moins l'une d'une direction de longueur et d'une direction de largeur de la poutre transversale (51) selon des positions où des identifications sont prévues sur différentes surfaces du conteneur (1).

6. Système de détection de conteneur selon la revendication 1, dans lequel le cadre de porte (5) comprend une poutre transversale (51) et deux poutres longitudinales (52), et au moins l'une parmi la poutre transversale (51) et la poutre longitudinale (52) présente une longueur ajustable.

7. Système de détection de conteneur selon la revendication 1, comprenant en outre une base à travers laquelle le scanner laser de zone (2) et l'appareil d'obtention d'identification sont tous deux montés sur le cadre de porte (5), dans lequel la base est pourvue d'au moins l'un parmi un mécanisme d'ajustement de position et un mécanisme d'ajustement d'attitude, dans lequel :
le mécanisme d'ajustement de position est configuré pour changer une position où le scanner laser de zone (2) ou l'appareil d'obtention d'identification est disposé sur le cadre de porte (5) ; et
le mécanisme d'ajustement d'attitude est configuré pour changer une attitude d'installation du scanner laser de zone (2) ou de l'appareil d'obtention d'identification.

8. Procédé de détection basé sur le système de détection de conteneur selon l'une quelconque des revendications 1 à 7, comprenant :
la détection de la position actuelle du conteneur (1) par le scanner laser de zone (2) ; et
l'obtention d'identifications sur des surfaces respectives du conteneur (1) par l'appareil d'obtention d'identification en fonction de la position actuelle du conteneur (1).

9. Procédé de détection de conteneur selon la revendication 8, dans lequel l'appareil d'obtention d'identification comprend une pluralité de caméras de capture respectivement configurées pour capturer des identifications sur différentes surfaces du conteneur (1), et le procédé de détection de conteneur comprend en outre :
la réception d'identifications obtenues par la pluralité de caméras de capture ;
l'extraction de résultats d'identification à partir des identifications obtenues par la pluralité de caméras de capture ; et la délivrance d'un résultat d'identification final après vote sur les résultats d'identification.

10. Procédé de détection de conteneur selon la revendication 8, dans lequel l'appareil d'obtention d'identification comprend une pluralité de caméras de capture respectivement configurées pour capturer des identifications sur différentes surfaces du conteneur (1), et l'étape d'obtention d'identifications sur des surfaces respectives du conteneur (1) par l'appareil d'obtention d'identification selon la position actuelle du conteneur (1) comprend :
la détection d'une distance entre la caméra de capture et une surface d'extrémité du conteneur (1) par le scanner laser de zone (2) ; et
la détermination d'un moment auquel la pluralité de caméras de capture sont activées en fonction de la distance entre la caméra de capture et la surface d'extrémité du conteneur (1) ;
facultativement, l'appareil d'obtention d'identification comprend une pluralité de caméras de capture respectivement configurées pour capturer des identifications sur différentes surfaces du conteneur (1), de sorte que l'étape d'obtention d'identifications sur des côtés respectifs du conteneur (1) par l'appareil d'obtention d'identification selon la position actuelle du conteneur (1) comprend :
la détection d'une distance entre la caméra de capture et une surface d'extrémité avant (14) par le scanner laser de zone (2) ;
la détermination d'un moment auquel les caméras de capture sont activées pour capturer la surface d'extrémité avant (14), un premier côté (11) et une zone avant d'une surface supérieure (13) du conteneur (1) en fonction de la distance entre la caméra de capture et la surface d'extrémité avant (14) ; et/ou
l'étape d'obtention d'identifications sur des côtés respectifs du conteneur (1) par l'appareil d'obtention d'identification selon la position actuelle du conteneur (1) comprend :
la détection d'une distance entre la caméra de capture et une surface d'extrémité arrière (15) par le scanner laser de zone (2) ;
la détermination d'un moment auquel les caméras de capture sont activées pour capturer la surface d'extrémité arrière (15), un deuxième côté (12) et une zone arrière d'une surface supérieure (13) du conteneur en fonction de la distance entre la caméra de capture et la surface d'extrémité arrière (15), dans lequel une identification sur le deuxième côté (12) est disposée à proximité de la surface d'extrémité arrière (15).

11. Procédé de détection de conteneur selon la revendication 8, dans lequel l'étape d'obtention d'identifications sur des côtés respectifs du conteneur (1) par l'appareil d'obtention d'identification selon la position actuelle du conteneur (1) comprend :
l'activation d'une première caméra de capture (31) pour obtenir une identification sur une surface d'extrémité avant (14) lorsque le scanner laser de zone (2) détecte qu'une distance entre la première caméra de capture (31) et la surface d'extrémité avant (14) du conteneur (1) atteint une première valeur préréglée ;
l'activation d'une deuxième caméra de capture (32) pour obtenir une identification sur un premier côté (11) lorsque le scanner laser de zone (2) détecte que le conteneur (1) se déplace vers la surface d'extrémité avant (14) dépasse une deuxième valeur préréglée de la deuxième caméra de capture (32), dans lequel l'identification sur le premier côté (11) est proche de la surface d'extrémité avant (14) ; l'activation d'une troisième caméra de capture (33) pour obtenir une identification sur une zone avant d'une surface supérieure (13) lorsque le scanner laser de zone (2) détecte qu'une distance entre la troisième caméra de capture (33) et la surface d'extrémité avant (14) atteint une troisième valeur préréglée ;
l'activation d'une quatrième caméra de capture (34) pour obtenir une identification sur un deuxième côté (12) lorsque le scanner laser de zone (2) détecte que la quatrième caméra de capture (34) est située devant une surface d'extrémité arrière (15), et avec une distance depuis la surface d'extrémité arrière (15) atteignant une quatrième valeur préréglée, dans lequel l'identification sur le deuxième côté (12) est proche de l'extrémité arrière (15) ;
l'activation d'une troisième caméra de capture (33) pour obtenir une identification sur une zone arrière de la surface supérieure (13) lorsque le scanner laser de zone (2) détecte que le conteneur (1) quitte le cadre de porte (5) et qu'une distance entre la troisième caméra de capture (33) et la surface d'extrémité arrière (15) atteint une cinquième valeur préréglée ; et
l'activation d'une cinquième caméra de capture (35) pour obtenir une identification sur la surface d'extrémité arrière (15) lorsque le scanner laser de zone (2) détecte qu'une distance entre la cinquième caméra de capture (35) et la surface d'extrémité arrière (15) atteint une sixième valeur préréglée.

12. Dispositif d'inspection de sécurité, comprenant le système de détection de conteneur selon l'une quelconque des revendications 1 à 7, dans lequel le système d'identification de conteneur est installé sur une flèche (6) du dispositif d'inspection de sécurité ; ou une flèche (6) du dispositif d'inspection de sécurité sert directement de cadre de porte (5) du système d'identification de conteneur.

13. Installation portuaire, comprenant au moins l'un parmi le système de détection de conteneur selon l'une quelconque des revendications 1 à 7 et le dispositif d'inspection de sécurité selon la revendication 12.
